# EUROPÄISCHE PATENTSCHRIFT

(11) **EP 2 833 770 B1**
(45) Veröffentlichungstag und Bekanntmachung des Hinweises auf die Patenterteilung: **25.05.2016**
(21) Anmeldenummer: 13716243.4
(22) Anmeldetag: 03.04.2013
(51) Int. Cl.: A47J 43/07, B05B 3/00, B05B 3/14, B05B 11/00

(54) **KÜCHENMASCHINE**
FOOD PROCESSOR
ROBOT MÉNAGER

(30) Priorität: 04.04.2012 DE 102012102940
(43) Veröffentlichungstag der Anmeldung: 11.02.2015
(73) Patentinhaber: Vorwerk & Co. Interholding GmbH, 42275 Wuppertal (DE)
(72) Erfinder: KEMKER, Uwe, 42105 Wuppertal (DE); CALDEWEY, Uwe, 44229 Dortmund (DE); HACKERT, Georg, 44869 Bochum (DE); STARFLINGER, Frank, 44793 Bochum (DE)
(74) Vertreter: Müller, Enno
(86) Internationale Anmeldenummer: PCT/EP2013/056973
(87) Internationale Veröffentlichungsnummer: WO 2013/150045

(56) Entgegenhaltungen:
- DE-A1-102011 051 149

## Beschreibung

Die Erfindung betrifft eine Küchenmaschine mit einer unteren Standfläche, einer Rückseite und einer Vorderseite, wobei die Vorderseite - ausgehend von einer der Rückseite zugeordneten höchsten Ausbildung der Küchenmaschinebezogen auf eine Vertikale schräg ausgebildet ist und in der Vorderseite eine Aufnahme für ein Gargefäß ausgebildet ist, wobei weiter in einem oberen Bereich der Küchenmaschine freikragende Stangenteile ausgebildet sind, wobei die vorderen Enden der Stangenteile auf einer selben Horizontalebene und - bezogen auf eine am weitesten nach vorne ragende Erstreckung - zur Rückseite der Küchenmaschine zurückversetzt angeordnet sind.

Küchenmaschinen der in Rede stehenden Art sind bekannt. Diese dienen insbesondere im Haushaltsbereich zur Herstellung oder Vorbereitung von Speisen, wozu ein der Küchenmaschine zuordbares Gargefäß ausgelegt ist zur Aufnahme von Nahrungsmitteln, beispielsweise Gargüter oder Fluiden. In diesem Zusammenhang sind weiter Küchenmaschinen bekannt, die, bevorzugt in dem Gargefäß, ein elektromotorisch betreibbares Rührwerk und/oder eine Heizvorrichtung aufweisen.

Weiter wird beispielsweise auf die DE 102 10 442 A1 verwiesen, darüber hinaus weiter beispielsweise auf die DE 10 2011 051149 A1. Aus dieser Patentanmeldung ist eine Küchenmaschine bekannt, die eine im Wesentlichen ebenflächig verlaufene Standfläche zum Aufstellen der Küchenmaschine beispielsweise auf einer Arbeitsfläche aufweist. Von dieser Standfläche ausgehend erstreckt sich eine Rückseite im Wesentlichen in einer Vertikalebene zur Standfläche. Die bei Nutzung der Küchenmaschine insbesondere dem Benutzer zugewandte Vorderseite fällt im Wesentlichen ausgehend vom vertikal höchsten Bereich der Rückseite in Richtung auf das der Vorderseite zugewandte Ende der Standfläche ab, dies im Wesentlichen stufenartig, weiter bevorzugt mit über die Breite der Vorderseite betrachteten Vor- und Rücksprüngen.

Im Bereich der Vorderseite ist eine topfartige Vertikalvertiefung vorgesehen, zur stehenden Aufnahme des Gargefäßes, wobei die Aufnahme bevorzugt so ausgestaltet ist, dass das aufgenommene Gargefäß insbesondere im Bereich des Gefäßbodens im Wesentlichen konturangepasst umfasst ist, wobei weiter die Aufnahme einen Aufnahmeboden aufweist, auf welchem sich das Gargefäß im Wesentlichen abstützt.

Weiter ist diesbezüglich bekannt, die Aufnahme derart auszugestalten, dass in der Gargefäß-Aufnahmestellung eine zentrale, gegebenenfalls die Rührwerk-Drehachse zugleich aufnehmende Gefäßachse vertikal ausgerichtet ist. Weiter ist in diesem Zusammenhang bekannt, die Küchenmaschine zugeordnet der Vorderseite mit freikragenden Stangenteilen auszubilden, so insbesondere zwei auf einer gemeinsamen Horizontalebene zueinander beabstandete Stangenteile.

Aus der vorbezeichneten DE 10 2011 051149 A1 ist eine derartige Anordnung bekannt, bei welcher die im Wesentlichen im Übergangsbereich von Vorderseite und Rückseite in der Küchenmaschine festgelegten und von hieraus frei auskragenden Stangenteile zur Festlegung eines das Gargefäß im Garbetrieb überdeckenden Deckels dienen. Die der Anbindung der Stangenteile an der Küchenmaschine entgegengesetzten Enden der Stangenteile sind mit Bezug auf eine Vertikalprojektion auf die Standfläche der Küchenmaschine in Richtung auf die Rückseite der Küchenmaschine versetzt angeordnet, entsprechend zu einer in Vertikalprojektion auf die Standfläche betrachtete, maximal zur Rückseite beabstandete Konturlinie der Vorderseite beabstandet.

Im Hinblick auf den vorbeschriebenen Stand der Technik wird eine technische Problematik der Erfindung darin gesehen, eine Küchenmaschine der in Rede stehenden Art insbesondere hinsichtlich einer günstigen Handhabung weiter zu verbessern.

Eine mögliche Lösung der Aufgabe ist nach einem ersten Erfindungsgedanken bei einer Küchenmaschine gegeben, bei welcher darauf abgestellt ist, dass das Zurückversetzungsmaß 25 Prozent bis 50 Prozent, weiter bevorzugt etwa einem Drittel der größten Erstreckung der Küchenmaschine in Tiefenrichtung - von Rückseite zur Vorderseite - im Standflächenbereich der Küchenmaschine entspricht, wobei das Maß zugleich etwa der Hälfte, weiter bevorzugt 40 Prozent bis 60 Prozent des Horizontalabstandes der Längsmittelachsen der Stangenteile zueinander entspricht, wobei darüber hinaus die Kontur der Vorderseite jedenfalls im Bereich der Stangenteile abgerundet verläuft.

Zufolge dieser Ausgestaltung ist eine Küchenmaschine angegeben, welche insbesondere hinsichtlich der Handhabung derselben Vorteile bietet. Die Stangenteile können zufolge der vorbeschriebenen Anordnung und Ausrichtung in vorteilhafter Weise beispielsweise als Tragegriffe für die Küchenmaschine genutzt werden, um beispielsweise den Standort der Küchenmaschine zu wechseln. Die Stangenteile sind hierzu in günstiger Position und in einem günstigen Abstand sowohl zueinander als auch zu der Vorderseite beabstandet.

So sind die Stangenteile bevorzugt so angeordnet, dass eine günstige Gewichtsverteilung erreicht wird. Darüber hinaus ist die Anordnung der Stangenteile bevorzugt hinsichtlich des Schwerpunktes der Küchenmaschine günstig gewählt. So kann die Küchenmaschine in einfachster Weise vor dem Körper des Benutzers, hier auch mit dem maximal zur Rückseite beabstandeten Bereich der Vorderseite an dem Körper gegebenenfalls anliegend, in günstiger Weise getragen werden.

Der bevorzugte Abstand der freien Enden der Stangenteile zu der maximal zur Rückseite beabstandeten Vorderseitenkontur sowie die Beabstandung der Stangenteile zueinander in Horizontalrichtung bieten ein ergonomisch günstiges Tragen der Küchenmaschine.

Darüber hinaus sind die Stangenteile auch in günstiger Weise als Abstands- bzw. Stützelemente nutzbar, was beispielsweise eine Überkopf-Aufstellung der Küchenmaschine, weiter beispielsweise zu Reinigungs- oder Reparaturzwecken ermöglicht. Hierbei ist eine im Wesentlichen punktuelle oder zumindest flächenmäßig kleine Abstützung der Küchenmaschine jedenfalls über die Stangenteile, insbesondere über die Bereiche der freien Enden der Stangenteile und einem Teilbereich der Vorderseite ermöglicht, so weiter insbesondere über die Stangenteile und der, der Standfläche zugeordneten Kontur der Vorderseite oder über die Stangenteile und dem Bereich der zwischen den Stangenteilen abgerundeten Kontur der Vorderseite.

Insbesondere zufolge Abstützung über die Stangenteile beziehungsweise über die freien Endbereiche der Stangenteile ist ein stabiles Aufstellen der Küchenmaschine abweichend von der üblichen Nutzungsstellung erreichbar, dies auch in Verbindung mit der, wie bevorzugt, in dem vertikal oberen, den Stangenteilen zugeordneten Bereich der Vorderseite abgerundeten Vorderseiten-Kontur. Auch ist über die Anordnung der Stangenteile und der hierdurch nutzbaren Abstützung über insbesondere die Endbereiche der Stangenteile lediglich eine punktuelle oder zumindest kleinflächige Abstützung der Küchenmaschine im Bereich der Vorderseite, beispielsweise in einer Überkopfstellung der Küchenmaschine, gegeben. Die über die punktuelle oder kleinflächige Abstützung hinausgehende wesentlich größere Fläche der Vorderseite ist auch in einer solchen Überkopf-Stellung der Küchenmaschine unbelastet, womit beispielsweise ein großflächiges Verkratzen der Vorderseiten-Oberfläche vermieden wird.

Die Standfläche ist bevorzugt im Wesentlichen ebenflächig verlaufend gebildet. Sie kann durch die Aufstellflächen von Standfüßen bestimmt sein.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

So ist in einer weiter bevorzugten Ausgestaltung vorgesehen, dass das Bedienfeld Teil einer durchgehenden, im Querschnitt schräg oder eckig (senkrecht) verlaufenden Vorderseite ist. Bevorzugt ist die Vorderseite über die gesamte Höhe, hier auch weiter bevorzugt über die gesamte Breite durchgehend, weiter bevorzugt zumindest annähernd ebenflächig ausgebildet, hier zumindest bezüglich der vorderseitigen Gehäuseausbildung bevorzugt keine über die Vorderseiten-Ebene hinausgehende Vor- und Rücksprünge insbesondere im zweistelligen Millimeterbereich aufweisend. Eine Ausnahme bildet hierbei die Aufnahme für das Gargefäß. Diese Aufnahme im Wesentlichen umgebend ist die Vorderseite der Küchenmaschine bevorzugt glattflächig gebildet.

Hierbei nimmt die Vorderseite in einer Seitenansicht gegen die Küchenmaschine bevorzugt einen schrägen Winkel zur Standfläche ein, weiter bevorzugt zumindest teilweise einen schrägen Winkel von 30 bis 60 Grad, weiter bevorzugt etwa 45 Grad.

An der Vorderseite beziehungsweise wie weiter bevorzugt, in die Vorderseite integriert ist ein Bedienfeld für die Küchenmaschine vorgesehen. Dieses Bedienfeld weist insbesondere Tasten, Knöpfe, wie beispielsweise Drehknöpfe, oder andere Schalter zur Bedienung der Küchenmaschine auf, darüber hinaus weiter bevorzugt ein Display zum Anzeigen von über die Schalter einzustellender Parameter. Auch kann in dem Bedienfeld zusätzlich oder alternativ ein Touchscreen-Display vorgesehen sein.

Ein Schalter, gegebenenfalls auch alle Schalter, ragen in einer Ausgestaltung über die bevorzugt durchgehend verlaufende zugeordnete Oberfläche der Vorderseite hinaus. Es ist weiter eine Ausgestaltung möglich, bei welcher die Ebene des Bedienfeldes bevorzugt stufenlos übergeht in die weitere sich in Richtung auf die Rückseite erstreckende Ebene der Vorderseite.

Weiter bevorzugt ist vorgesehen, dass die Rückseite, bezogen auf eine Seitenansicht, unter Einschluss eines spitzen Winkels zu einer Vertikalen, zur Vorderseite hin geneigt verläuft, wobei der Randabschluss der Vorderseite in einer Vertikalprojektion teilweise überkragend zu der Rückseite ausgebildet ist. Die Rückseite erstreckt sich hierbei weiter bevorzugt mit Bezug zu einer auf die Standfläche der Küchenmaschine stehenden Vertikalen in einem spitzen Winkel von 5 bis 30 Grad, weiter bevorzugt 10 bis 20 Grad hin zur Vorderseite geneigt.

Die Vorderkante kragt mit ihrem, der Rückseite zugewandten Bereich, welcher gegebenenfalls auch insoweit nur in einer Draufsicht erkenntlich ist, bevorzugt kragenartig über die Rückseite hinaus. Weiter bevorzugt ist das Überkragmaß der Vorderseite über die Rückseite so gewählt, dass der überkragende Bereich in einer Vertikalprojektion mit Bezug zu der Rückseite der Küchenmaschine nicht über die Standfläche hinausragt.

Weiter bevorzugt ist das horizontale, d.h. im Wesentlichen parallel zur Standfläche betrachtete Überkragmaß der Vorderseite über die Rückseite so gewählt, dass eine Randkontur der Vorderseite sich zwischen der vertikal unteren, der Standfläche zugeordneten Kontur der Rückseite und der vertikal oberen, der Vorderseite zugeordneten Randkontur der Rückseite erstreckt. In bevorzugter Ausgestaltung entspricht das Überkragmaß der Vorderseite über die der Vorderseite zugeordnete, vertikal obere Kontur der Rückseite etwa einem Viertel bis drei Viertel des quer zur Vertikalen betrachteten Abstandsmaßes zwischen der der Vorderseite zugeordneten oberen Kontur der Rückseite und der der Standfläche zugeordneten vertikal unteren Kontur der Rückseite. Zufolge dieser Ausgestaltung ist beispielsweise zu Reinigungs- oder Reparaturzwecken die Küchenmaschine quasi auf die Rückseite derselben abstellbar, ohne dass hierbei die Rückseite der Küchenmaschine vollflächig auf einer Arbeitsfläche oder dergleichen aufliegt. Eine Abstützung erfolgt bevorzugt lediglich punktuell oder im Bereich kleiner Flächen, dies weiter insbesondere in dem der Standfläche zugeordneten vertikal unteren Bereich der Rückseite (im Wesentlichen im Übergangsbereich von Rückseite zur Standfläche) und in dem über die Rückseite überkragenden Bereich der Vorderseite.

Die Randkante der Vorderseite verläuft weiter bevorzugt zumindest beginnend mit der Höhe der Stangenteile durchgehend gerade oder gekrümmt, dies weiter bevorzugt bei Krümmung mit einer höchsten Erstreckung zwischen den Stangenteilen. Die Krümmung ist hierbei weiter bevorzugt mit über den Krümmungsverlauf sich änderndem Radius oder gleichem Radius versehen, so weiter bevorzugt ausgehend von einem Stangenteil in Richtung Zenith der Krümmung mit einem zunehmendem Krümmungsradius oder gerade verlaufend zwischen den Stangenteilen. Der in ordnungsgemäßer Betriebsstellung der Küchenmaschine betrachtete vertikale Abstand des bei einer Krümmung zwischen den Stangenteilen sich ergebenden Zeniths der Randkante der Vorderseite zu den bevorzugt, unabhängig von einer Ausbildung der Randkante, auf einer gemeinsamen Horizontalebene angeordneten Mittelachsen der Stangenteile entspricht bevorzugt einem Viertel bis einem Zehntel, weiter bevorzugt einem Fünftel bis einem Sechstel des horizontalen Abstandes der Mittelachsen der Stangenteile zueinander.

In weiter bevorzugter Ausgestaltung ist die größte Breite der Vorderseite unterhalb der Stangenteile ausgebildet, weiter bevorzugt etwa vertikal mittig zwischen den Stangenteilen und der Standfläche, dies weiter bevorzugt bezogen auf eine Projektion in eine Vertikalebene. Die größte Breite der Vorderseite entspricht hierbei weiter bevorzugt etwa dem 1,5- bis 2,5-Fachen des horizontalen Abstandsmaßes der Stangenteile im Bereich deren Mittelachse. So ist in diesem Zusammenhang weiter vorgesehen, dass der horizontale Abstand der Stangenteile zueinander bezogen auf deren Mittelachsen 40 Prozent bis 60 Prozent der größten Breite der Vorderseite entspricht.

Die größte Breite kann bei rechteckiger oder quadratischer Kontur (Draufsicht) auch die Breite an sich sein.

Im Bereich der höchsten Erstreckung ist in weiter bevorzugter Ausgestaltung ein umfassbarer Griffbereich ausgebildet, dies weiter bevorzugt in dem sich zwischen den Stangenteilen ergebenden Bereich von Vorderseite und weiter bevorzugt Rückseite. Dies bietet die Möglichkeit des Tragens der Küchenmaschine beispielsweise in dem Fall, dass in der Aufnahme der Küchenmaschine ein Gargefäß aufgenommen ist, dessen Deckel weiter beispielsweise durch die beispielsweise als Befestigungsmittel ausgebildeten Stangenteile festgelegt ist. In diesem Nutzungsfall sind die Stangenteile gegebenenfalls nicht als Tragegriffe nutzbar oder nur eingeschränkt nutzbar. Der umfassbare Griffbereich weist entsprechend eine Durchgreiföffnung auf, die sich sowohl zur Vorderseite hin als auch bevorzugt zur Rückseite hin öffnet, während weiter bevorzugt der Griffbereich aus der bevorzugt gekrümmten Kontur insbesondere der Vorderseite heraus geformt ist. Auch bietet dieser Griffbereich eine günstige Handhabung beispielsweise zum Kippen der Küchenmaschine aus der üblichen Nutzungsstellung heraus in eine Reinigungs- und/ oder Reparaturstellung, in welcher die Küchenmaschine rückseitig oder unter Nutzung der Stangenteile sich abstützend auf einer Arbeitsfläche oder dergleichen abgelegt wird.

Die freikragende Länge der Stangenteile, d.h. entsprechend die freie Länge der Stangenteile ausgehend von der Durchdringungsebene zu der Vorderseite, entspricht - bezogen auf eine Mittelachse derselben - bevorzugt 20 bis 50 Prozent der größten Tiefe der Küchenmaschine, welche größte Tiefe der Küchenmaschine weiter bevorzugt im Bereich der Standfläche gegeben ist. Weiter bevorzugt entspricht diese freikragende Länge der Stangenteile etwa einem Drittel der größten Tiefe der Küchenmaschine.

Zudem schließen über die gesamte freikragende Länge der Stangenteile - bezogen auf eine Seitenansicht - die Längsachsen der Stangenteile bevorzugt einen spitzen Winkel zur Vorderseite ein, insbesondere einen spitzen Winkel von 15 bis 60 Grad, weiter bevorzugt etwa 45 Grad. Die Längsachsen der Stangenteile erstrecken sich hierbei bevorzugt in einer Parallelebene zur Standfläche, entsprechend in üblicher Nutzungsstellung der Küchenmaschine in einer Horizontalebene. Die freikragende Länge der Stangenteile über die Ebene der Vorderseite hinaus sowie der eingeschlossene spitze Winkel zwischen den Längsachsen der Stangenteile und der Vorderseite bieten in vorteilhafter Weise genügend Raum zum Unter- und Umgreifen der Stangenteile durch den Benutzer. Darüber hinaus ist eine genügende Beabstandung der Vorderseite zu einer Arbeitsfläche oder dergleichen bei Ablegen der Küchenmaschine unter Nutzung einer Abstützung auf den Stangenteilen gegeben.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, gegebenenfalls also auch dimensionslos, insbesondere 1,01-Fach etc. einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich ein Ausführungsbeispiel darstellt. Auf der Zeichnung zeigt:
- Fig. 1: eine Küchenmaschine der in Rede stehenden Art in Vorderansicht;
- Fig. 2: die Seitenansicht hierzu;
- Fig. 3: die Draufsicht auf die Küchenmaschine;
- Fig. 4: die Unteransicht hierzu;

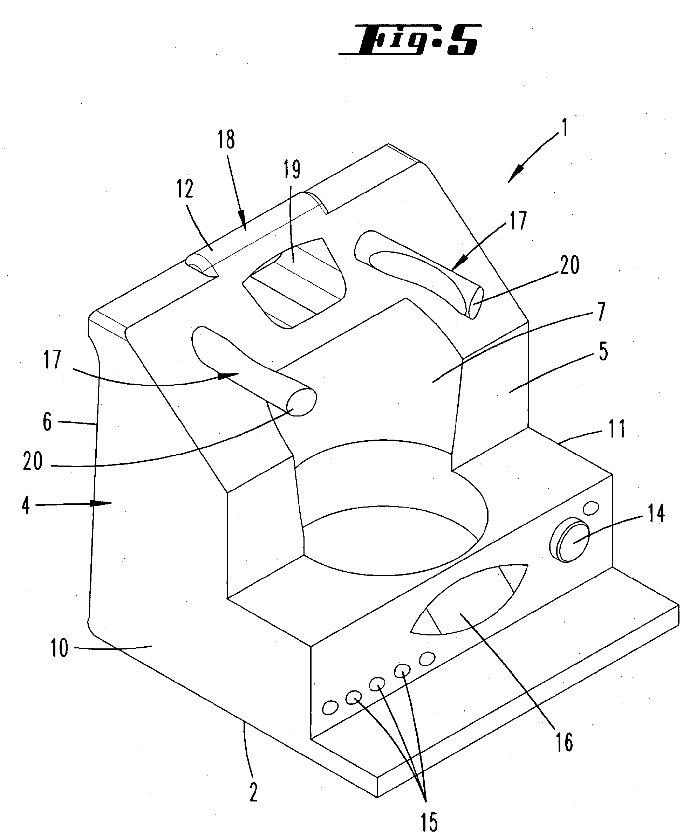

- Fig. 5: die Küchenmaschine in perspektivischer Darstellung;
- Fig. 6: eine der Figur 1 entsprechende Darstellung, jedoch bei Anordnung eines Gargefäßes in der Küchenmaschine;
- Fig. 7: die Seitenansicht hierzu;
- Fig. 8: eine der Figur 5 entsprechende perspektivische Darstellung, jedoch bei Anordnung eines Gargefäßes in der Küchenmaschine;
- Fig. 9: eine Seitenansicht gemäß Figur 2 gegen die Küchenmaschine ohne Rührgefäß bei Abstellen der Küchenmaschine im Bereich deren Rückseite;
- Fig. 10: eine der Figur 9 entsprechende Darstellung, jedoch bei Abstellen der Küchenmaschine über einen Teilbereich der Vorderseite und über die Vorderseite frei vorkragende Stangenteile;
- Fig. 11: eine der Figur 10 entsprechende Darstellung, jedoch bei Abstützung über die Stangenteile und einem der Rückseite zugeordneten Bereich der Vorderseite.

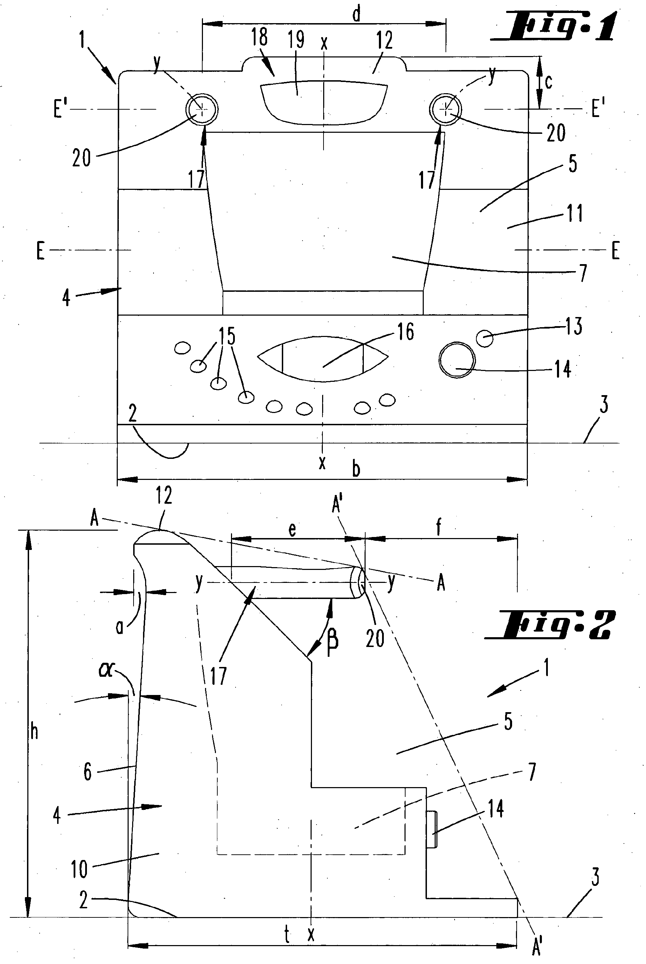

Dargestellt und beschrieben ist zunächst mit Bezug zur Figur 1 eine elektrisch betriebene Küchenmaschine 1. Diese weist zunächst eine untere, im Wesentlichen ebenflächig verlaufende Standfläche 2 auf, zur Abstützung der Küchenmaschine 1 auf einer Fläche 3, beispielsweise Arbeitsfläche in der üblichen Nutzungsstellung der Küchenmaschine 1 gemäß den Darstellungen in den Figuren 1 und 2.

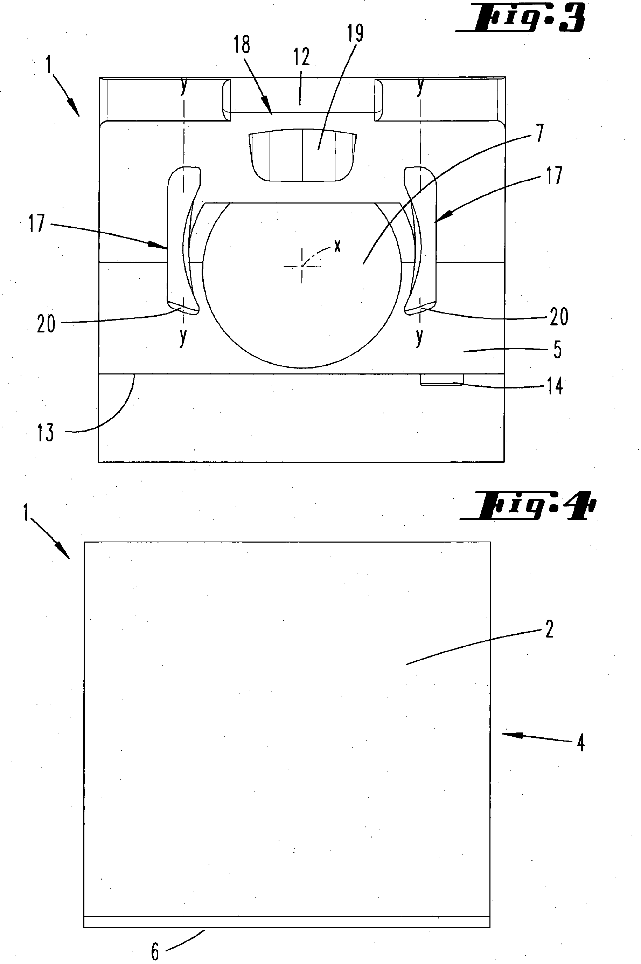

Die Standfläche 2 ist im Wesentlichen gebildet durch den Boden eines Maschinengehäuses 4, wobei weiter die Standfläche 2 gemäß der Darstellung in Figur 4 im Wesentlichen eine Viereckgestaltung aufweist, mit kantigen Ecken. Die Ecken können auch abgerundet sein. Sie können aber auch eine Dreieckgestaltung aufweisen, mit stark verrundeten Eckbereichen, sowie weiter bevorzugt einer nach außen gerichteten, kreislinienabschnittförmigen Kontur zwischen den Eckbereichen. Im Fall einer Dreieckgestaltung kann eine stark verrundete Dreieckspitze der Standfläche 2 in üblicher Nutzungsstellung der Küchenmaschine 1 zur Vorderseite 5 weisen. Mit Bezug auf eine Seitenansicht gemäß Figur 2 verläuft die Vorderseite 5 jedenfalls in einem Teilbereich in einem spitzen Winkel β von etwa 45° zu der durch die Standfläche 2 definierten Ebene (hier gleichbedeutend mit einer Horizontalen durch die Achse y-y, welche weiter unten auch noch in näherer Einzelheit erläutert ist). Sie kann auch, was nicht dargestellt ist, von der Anbindung im Bereich der Standfläche 2 ausgehend in Richtung auf die Rückseite 6 bevorzugt zumindest annähernd gleichmäßig ansteigend gebildet sein.

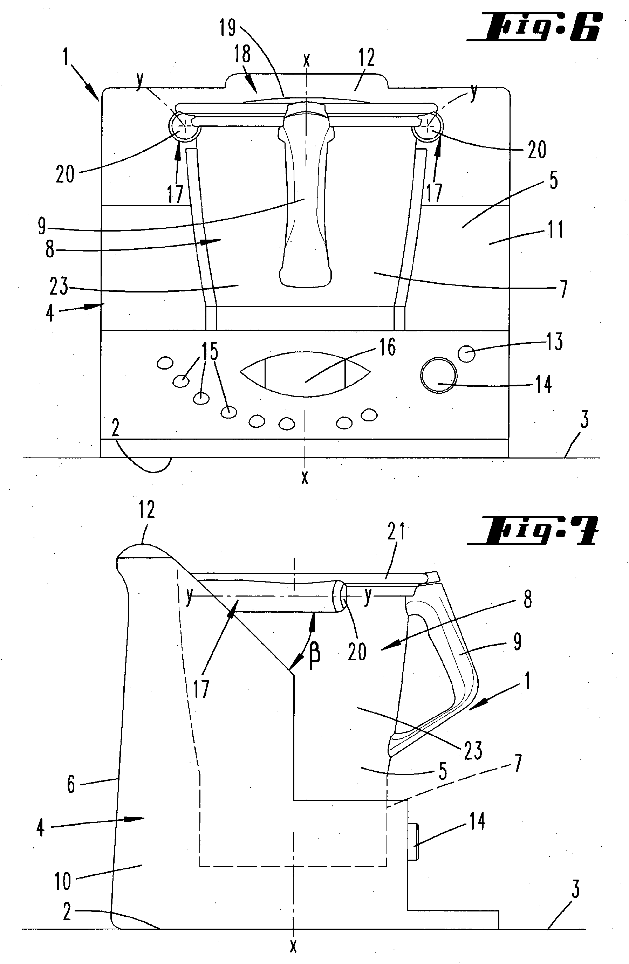

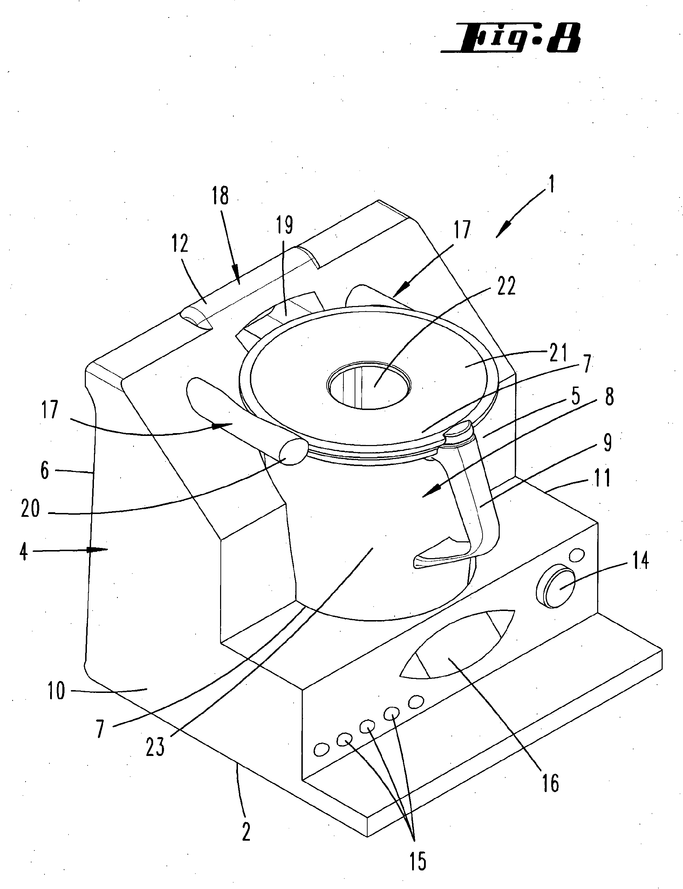

Die Sichtseite der Vorderseite 5 ist gestuft gestaltet. Sie kann auch, was nicht dargestellt ist, über die gesamte Fläche eben gestaltet sein, lediglich mit Ausnahme eines mit Bezug auf eine Draufsicht gemäß Figur 3 etwa mittigen Bereichs, in welchem die Vorderseite 5 unterbrochen ist von einer Aufnahme 7 für ein Gargefäß 8. Die Aufnahme 7 ist geformt in Art einer von der Oberfläche der Vorderseite 5 ausgehenden, sich nach vertikal unten in Richtung auf die Standfläche 2 erstreckenden, topfförmigen Vertiefung. In diese Aufnahme 7 ist zum Betrieb der Küchenmaschine, 1 ein Gargefäß 8 insbesondere im Bereich dessen Bodenabschnittes weiter bevorzugt formschlüssig aufnehmbar (vgl. Fig. 6 bis 8). Ein an dem Gargefäß 8 angeordneter Handgriff 9 weist in der Zuordnungsstellung des Gargefäßes 8 in der Aufnahme 7 - in einer Projektion auf die Standfläche 2 - bevorzugt in Richtung auf die Vorderkante, gegebenenfalls auf die alternativ angemerkte stark verrundete Dreieckspitze der Standfläche 2.

Die Rückseite 6 des Maschinengehäuses 4 erstreckt sich mit Bezug auf eine Seitenansicht gemäß Figur 2 in einem spitzen Winkel α zu einer senkrecht zur Standfläche 2 ausgerichteten Vertikalen, weiter bevorzugt in einem spitzen Winkel α von etwa 5° bei einer Neigung in Richtung auf die Vorderseite 5.

Die Rückseite 6 geht im Wesentlichen dem Konturverlauf der Standfläche 2 folgend über in Seitenbereiche 10, die die Vorderseite 5 tragen.

Mit Bezug auf eine Frontalansicht gemäß Figur 1 verläuft die Randkante 11 der Vorderseite 5 beidseitig einer vertikalen Maschinen-Mittenachse x im Wesentli chen eckig, sie kann aber auch, was nicht dargestellt ist, durchgehend gekrümmt verlaufen, hierbei zunächst ausgehend von einem der Standfläche 2 zugewandten Bereich jeweils nach außen hin zunehmend und nach Überschreiten etwa einer die Höhe der Küchenmaschine 1 insgesamt halbierenden Ebene E abnehmend.

Insbesondere im Bereich des Zeniths 12, darüber hinaus auch teilweise in einem beidseitigen Bereich der Randkante 11 zum Zenith 12 erstreckt sich die Vorderseite 5 in einer Vertikalprojektion zumindest teilweise überkragend zu der Rückseite 6, weiter bevorzugt mit einem Überkragmaß a, welches etwa dem halben horizontalen Abstandsmaß der vertikal unteren Randkante der Rückseite 6 zu der vertikal oberen Randkante der Rückseite 6 zufolge der winkligen Anstellung der Rückseite 6 entspricht.

Teil der insgesamt bevorzugt durchgehenden, eckig oder schräg verlaufenden Vorderseite 5 ist ein Bedienfeld 13. Dieses erstreckt sich im Wesentlichen unterhalb der die Gesamthöhe der Küchenmaschine 1 halbierenden Ebene E, weiter bevorzugt unterhalb der Aufnahme 7 für das Gargefäß 8.

Das Bedienfeld 13 weist bevorzugt eine Mehrzahl von Reglern 14 und/oder Tastern 15 sowie weiter bevorzugt ein Display 16 zum Anzeigen der insbesondere über die Regler 14 und/oder Taster 15 einzustellenden Parameter, wie beispielsweise eine Rührwerk-Drehzahl eines in dem Gargefäß 8 vorgesehenen Rührwerks und/oder die Heiztemperatur einer auf das Gargefäß 8 beziehungsweise auf das Gargut im Gargefäß 8 einwirkenden Heizung und/oder die Zeit, über welche das Rührwerk und/oder die Heizung betrieben wird.

Die Regler 14 und/oder Taster 15, darüber hinaus gegebenenfalls auch das Display 16 sind in einer Ausgestaltung ebenflächig zu der Oberfläche der Vorderseite 5 ausgeformt, alternativ, wie auch dargestellt, gegenüber der Oberfläche der Vorderseite 5 erhaben, so insbesondere ein Regler 15.

Mit Bezug auf eine Seitenansicht gemäß Figur 2 weist die Küchenmaschine 1, insbesondere dessen Maschinengehäuse 4, eine Tiefe t auf, die im Wesentlichen der Höhe h des Gehäuses entspricht, darüber hinaus, wie weiter bevorzugt, auch der quer hierzu betrachteten Breite b des Gehäuses.

In dem sich oberhalb der halbierenden Ebene E erstreckenden Bereich sind im Bereich der Vorderseite 5 über die freie Oberfläche, d.h. der Sichtfläche nach vorne frei auskragende Stangenteile 17 angeordnet. Deren Mittelachsen y verlaufen bevorzugt parallel zueinander, weiter bevorzugt in einer zur Standfläche 2 beziehungsweise in ordnungsgemäßer Stellung der Küchenmaschine 1 gemäß Figur 1 in einer parallel zur Fläche 3 verlaufenden Ebene E', welche Ebene E' mit einem vertikalen Abstand c zu der vertikal höchsten Stelle der Küchenmaschine 1 im Bereich des Zeniths 12 nach unten beabstandet ist, welcher Abstand c bevorzugt einem Fünftel bis einem Zehntel, weiter bevorzugt etwa einem Achtel der Maschinenhöhe h entspricht.

In diesem sich oberhalb der Ebene E erstreckenden Bereich der Vorderseite 5 ist weiter bevorzugt zugeordnet dem Zenith 12 ein umfassbarer Griffbereich 18 ausgebildet, dies bei weiter fortlaufender, entsprechend nicht unterbrochener Kontur der Vorderseite 5. Hierzu ist eine Grifföffnung 19 vorgesehen, welche sich sowohl zur Vorderseite 5 hin als auch bevorzugt zur Rückseite 6 hin öffnet, um so ein Durchgreifen zu erlauben. Eine vertikal untere Randkante der Grifföffnung 19 erstreckt sich bevorzugt auf Höhe der durch die Mittelachse y der Stangenteile 17 definierten Ebene E'.

Die Stangenteile 17 sind beidseitig der Mittenachse x mit gleichem Abstand zu dieser angeordnet, wobei der horizontale Abstand d der Stangenteile 17 zueinander, bezogen auf deren Mittelachsen y, etwa dem halben Maß der Breitenerstreckung b der Küchenmaschine 1 entspricht.

Die Stangenteile 17 sind bevorzugt gleich gestaltet, insbesondere mit Bezug auf die Mittenachse x der Küchenmaschine 1 symmetrisch ausgebildet. Hierbei weist jedes Stangenteil 17 eine im Wesentlichen walzenförmige Gestaltung mit kreisscheibenförmigem Querschnitt auf. Hierbei ist jedes Stangenteil 17 frei über die Sichtfläche der Vorderseite 5 hinaus kragend angeordnet, weiter insbesondere das Maschinengehäuse 4 im Bereich der Vorderseite 5 zur Festlegung im Bereich des Gehäuseinneren durchsetzend. Hierbei schließt die Mittelachse y eines jeden Stangenteiles 17 zu der zugewandten Fläche der Vorderseite 5 bevorzugt einen Winkel β von etwa 45° ein.

Jedes Stangenteil 17 ist in einer Ausgestaltung bevorzugt über die gesamte zumindest freikragende Länge kreiszylindrisch gestaltet. In weiterer Ausgestaltung, wie auch dargestellt, ist über die freikragende,Länge des Stangenteiles 17 dieses in unterschiedlichen Bereichen lediglich teilweise kreisscheibenförmig gebildet, wobei jedenfalls das Stangenteil 17 insgesamt in einem durch einen maximalen Kreisscheiben-Durchmesser des Stangenteiles 17 durchmesserdefinierten, gedachten Walzenmantel aufgenommen ist.

Die über die Vorderseite 5 hinaus freikragende Länge e der Mittelachse y eines jeden Stangenteiles 17 entspricht bevorzugt etwa einem Drittel der Gerätetiefe t beziehungsweise der Gerätebreite b. Entsprechend ist das freie vordere Ende 20 gegenüber der am weitesten nach vorne ragenden Erstreckung der Küchenmaschine 1 in Richtung auf die Rückseite 6 zurückversetzt, dies weiter bevorzugt um ein Zurückversetzungsmaß f, das etwa dem halben Tiefenerstreckungsmaß t der Küchenmaschine 1 entspricht, weiter bevorzugt etwa dem halben Abstandsmaß d zwischen den Mittelachsen y der Stangenteile 17.

Die Aufnahme 7 für das Gargefäß 8 ist weiter bevorzugt so angeordnet, dass die Mittenachse x der Küchenmaschine 1 diese Aufnahme 7 bevorzugt mittig durchsetzt, wobei weiter mit Bezug auf eine Stirnansicht gemäß Figur 1 die in der Vorderseite 5 umlaufende Randkante der Aufnahme 7 sich bevorzugt gleichmäßig oberhalb und unterhalb der Mittenebene E erstreckt.

In den Figuren 6 bis 9 ist die Küchenmaschine 1 in einer bevorzugten Nutzungsstellung dargestellt. In der Aufnahme 7 ist ein Gargefäß 8 aufgenommen. Im Bodenbereich weist das Gargefäß 8 bevorzugt ein Rührwerk auf. Dieses ist in der Zuordnungsstellung des Gargefäßes 8 in der Aufnahme 7 bevorzugt formschlüssig gekoppelt mit einem in der Küchenmaschine 1 vorgesehenen Rührwerkantrieb.

Das Gargefäß 8 ist weiter insbesondere im Betrieb des Rührwerks und/ oder im Betrieb einer Heizung durch einen Deckel 21 verschlossen. Dieser weist bevorzugt zentral, die Mittenachse x der Küchenmaschine 1 und somit auch die Vertikalachse des Gargefäßes 8 aufnehmend, eine Einfüllöffnung 22 auf, dies weiter bevorzugt bei insgesamt im Wesentlichen kreisscheibenförmigem Grundriss des Deckels 21.

Das Gargefäß 8 weist eine vom Bodenbereich sich in Vertikalrichtung nach oben erstreckende Gefäßwandung 23 auf.

Insbesondere im Betrieb der Küchenmaschine 1, weiter insbesondere im Rührwerk- und%oder Heizbetrieb ist der auf dem Gargefäß 8 aufgesetzte Deckel 21 zu verriegeln, da im Betrieb der Küchenmaschine 1 gegebenenfalls hohe Kräfte, beispielsweise durch einen Zerkleinerungsprozess mittels des Rührwerks und/ oder durch Fluiddynamik im Gargefäß 8 entstehen können. Hierzu werden in einer bevorzugten Ausgestaltung die Stangenteile 17 genutzt, welche jeweils um ihre Mittelachse y drehbeweglich in dem Maschinengehäuse 4 gelagert sind. Die Stangenteile 17 sind ausgelegt zum festlegenden Überfangen zugeordneter Deckelrandbereiche. Bezüglich der weiteren Ausgestaltung und Wirkungsweise wird auf die eingangs zitierte DE 10 2011 051149 A1 verwiesen. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen.

Im üblichen Betrieb der Küchenmaschine 1, d.h. bei eingesetztem Gargefäß 8, ist die Küchenmaschine 1 bevorzugt mittels des Griffbereiches 18 anhebbar, beispielsweise zum Versetzen der Küchenmaschine 1. Alternativ kann die Küchenmaschine 1 auch in dieser Betriebsstellung zum Tragen im Bereich der Stangenteile 17 gegriffen werden.

Die vorbeschriebene Geometrie der Küchenmaschine 1 sowie insbesondere die über die Sichtfläche der Vorderseite 5 hinausragenden Stangenteile 17 bieten zudem günstige Möglichkeiten zum Aufstellen der Küchenmaschine 1 in anderen, von der üblichen Arbeitsposition gemäß Figur 1 abweichenden Positionen, so weiter beispielsweise zu Reinigungs- und/oder Wartungs- beziehungsweise Reparaturzwecken.

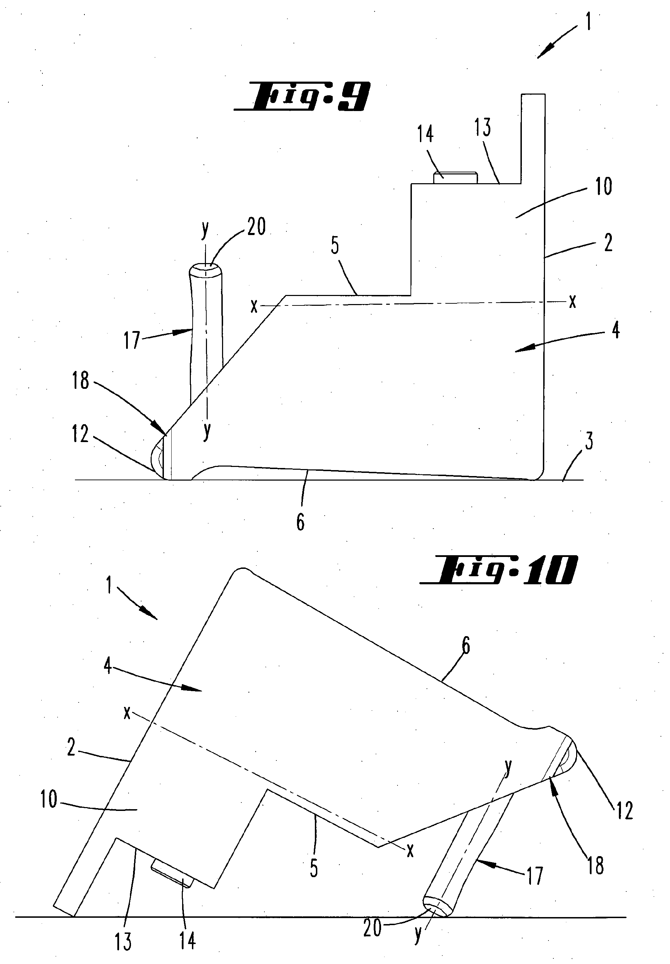

So ist gemäß der Darstellung in Figur 9 die Küchenmaschine 1 quasi auf den Rücken legbar, wobei sich die Küchenmaschine 1 hier im Wesentlichen punkt- oder linienförmig auf dem über die Rückseite 6 frei überkragenden Abschnitt der Vorderseite 5 und punkt- beziehungsweise linienförmig auf dem der Standfläche 2 zugeordneten Randbereich der Rückseite 6 abstützt. Zufolge der wink - ligen Ausrichtung der Rückseite 6 gegenüber einer Senkrechten zur Standfläche 2 liegt die Rückseite 6 in dieser Position nicht vollflächig auf der Ablage, zum Beispiel Fläche 3 auf. Die punktuelle beziehungsweise linienförmige Anlage schützt entsprechend die Oberfläche der Rückseite 6 vor Beschädigungen, beispielsweise Kratzern. Auch kann aus dieser Stellung heraus die Küchenmaschine 1 auf die eine oder andere Seite, quasi um eine Achse parallel zur Mittenachse x geschwenkt werden, bis in eine Stellung, in welcher eine Abstützung über das zugewandte Stangenteil 17 auf der Fläche 3 erfolgt. Es ist somit eine stabile Seitenlage der Küchenmaschine 1 einnehmbar.

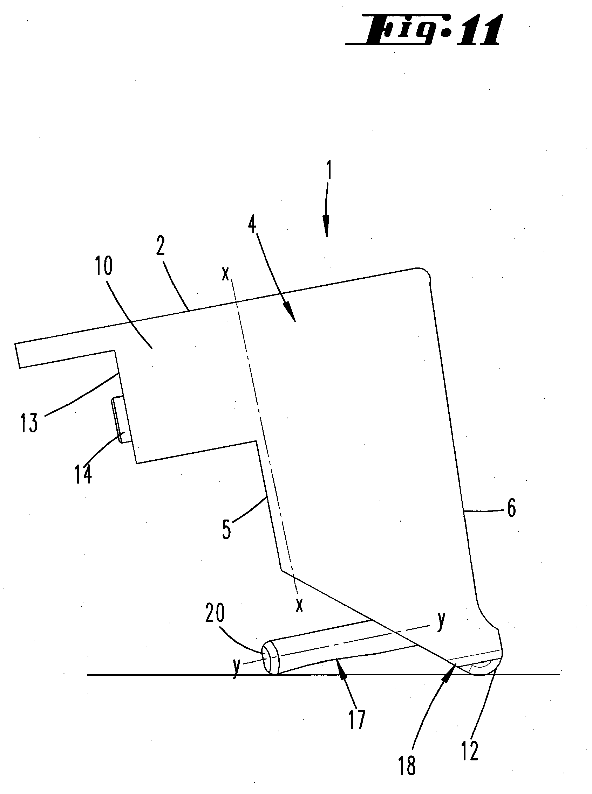

Auch ist eine Ablage der Küchenmaschine 1 auf der Fläche 3 quasi in einer Überkopf-Stellung gemäß den Figuren 10 und 11 ermöglicht, dies jeweils unter Schonung der bevorzugt aus gestalterischen Gründen beispielsweise hochwertig ausgeführten Oberfläche der Vorderseite 5. Hierzu werden jeweils die Stangenteile 17 als Distanzstützen genutzt, um so die Oberfläche der Vorderseite 5 zur Oberfläche 3 zu distanzieren.

Wie insbesondere aus der Darstellung in Figur 2 zu erkennen, ist zwischen den freien Enden 20 der Stangenteile 17 und dem höchsten Erstreckungsbereich der Küchenmaschine 1 - hier im Bereich des Zeniths 12 - eine Auflageebene A aufspannbar, wie auch zwischen den freien Enden 20 der Stangenteile 17 und dem zur Rückseite 6 maximal beabstandeten Bereich der Vorderseite 5 eine Auflageebene A'. Bevorzugt sind hierbei etwaige Regler 14 und/oder Taster 15 hinsichtlich ihrer über die Ebene der Vorderseite 5 hinausgehenden Erstreckung so gewählt, dass diese nicht über die Auflageebene A' hinaus ragen.

So ist in Figur 10 eine Stellung der Küchenmaschine 1 dargestellt, in welcher diese sich in der Auflageebene A' über den standflächenseitigen Endbereich der Vorderseite 5 und die freien Enden 20 der Stangenteile 17 auf der Fläche 3 abstützt. Es ist hier eine stabile Ablagestellung der Küchenmaschine 1 erreicht, die beispielsweise die Reinigung des Gehäuses wie auch die Wartung der Maschine erlaubt.

Eine Abstützung der Küchenmaschine 1 im Bereich der Auflageebene A ist in der Figur 11 dargestellt. Hier erfolgt eine Abstützung über die Endbereiche der Stangenteile 17 und im Wesentlichen über den Zenithbereich der umlaufenden Randkante 11 der Vorderseite 5. Auch hierdurch ist bevorzugt eine stabile Ablage der Küchenmaschine 1 auf der Fläche 3 erreicht, die insbesondere einen günstigen Zugriff auf die Unterseite der Küchenmaschine 1 erlaubt.

Darüber hinaus ist die Küchenmaschine 1 insbesondere bei aus der Aufnahme 7 entnommenem Gargefäß 8 in günstiger Weise zufolge Erfassen der Stangenteile 17 zu tragen. Entsprechend bilden die Stangenteile 17 stabartige Griffteile.

**Bezugszeichenliste:**

| | | | |
|---|---|---|---|
| 1 | Küchenmaschine | a | Überkragmaß |
| 2 | Standfläche | b | Breite |
| 3 | Fläche | c | Abstand |
| 4 | Maschinengehäuse | d | Breite |
| 5 | Vorderseite | e | Länge |
| 6 | Rückseite | f | Zurückversetzungsmaß |
| 7 | Aufnahme | h | Höhe |
| 8 | Gargefäß | t | Tiefe |
| 9 | Handgriff | x | Mittenachse |
| 10 | Seitenbereich | y | Mittelachse |
| 11 | Randkante | | |
| 12 | Zenith | A | Auflageebene |
| 13 | Bedienfeld | A' | Auflageebene |
| 14 | Regler | E | Ebene |
| 15 | Taster | E' | Ebene |
| 16 | Display | | |
| 17 | Stangenteil | α | Winkel |
| 18 | Griffbereich | β | Winkel |
| 19 | Grifföffnung | | |
| 20 | Ende | | |
| 21 | Deckel | | |
| 22 | Einfüllöffnung | | |
| 23 | Gefäßwandung | | |

## Patentansprüche

1. Küchenmaschine (1) mit einer unteren Standfläche (2), einer Rückseite (6) und einer Vorderseite (5), wobei die Vorderseite (5) ausgehend von einer der Rückseite (6) zugeordneten höchsten Ausbildung der Küchenmaschine (1) bezogen auf eine Vertikale schräg ausgebildet ist und in der Vorderseite (5) eine Aufnahme (7) für ein Gargefäß (8) ausgebildet ist, wobei weiter in einem oberen Bereich der Küchenmaschine (1) frei kragende Stangenteile (17) ausgebildet sind, wobei die vorderen Enden (20) der Stangenteile (17) auf einer selben Horizontalebene (E') und bezogen auf eine am weitesten nach vorne ragende Erstreckung zur Rückseite (6) der Küchenmaschine (1) zurückversetzt angeordnet sind, **dadurch gekennzeichnet, dass** das Zurückversetzungsmaß (f) 25% bis 50% der größten Erstreckung (t) der Küchenmaschine (1) in Tiefenrichtung im Standflächenbereich (2) der Küchenmaschine (1) entspricht, wobei das Maß (f) zugleich etwa der Hälfte des Horizontalabstandes (d) der Längsmittelachsen (y) der Stangenteile (17) zueinander entspricht, wobei darüber hinaus die Kontur der Vorderseite (5) jedenfalls im Bereich der Stangenteile (17) abgerundet verläuft.

2. Küchenmaschine nach Anspruch 1 oder insbesondere danach, **dadurch gekennzeichnet, dass** die Küchenmaschine (1) an der Vorderseite (5) ein Bedienfeld (13) aufweist und dass das Bedienfeld (13) senkrecht verlaufend ausgebildet oder Teil einer durchgehenden, schräg verlaufenden Vorderseite (5) ist.

3. Küchenmaschine nach einem oder mehreren der vorhergehenden Ansprüche, **dadurch gekennzeichnet, dass** die Rückseite (6) bezogen auf eine Seitenansicht unter Einschluss eines spitzen Winkels (α) zu einer Vertikalen, zur Vorderseite (5) hin geneigt verläuft, wobei der Randabschluss der Vorderseite (5) in einer Vertikalprojektion teilweise überkragend zu der Rückseite (6) ausgebildet ist.

4. Küchenmaschine nach einem oder mehreren der vorhergehenden Ansprüche, **dadurch gekennzeichnet, dass** die größte Breite (b) der Vorderseite (5) bei Unterschiedlichkeit der Breite unterhalb der Stangenteile (17) ausgebildet ist.

5. Küchenmaschine nach einem oder mehreren der vorhergehenden Ansprüche, gekennzeichnet, dass der horizontale Abstand (d) der Stangenteile (17) zueinander bezogen auf deren Mittelachsen (y) 40% bis 60% der größten Breite (b) der Vorderseite (5) entspricht.

6. Küchenmaschine nach einem oder mehreren der vorhergehenden Ansprüche, **dadurch gekennzeichnet, dass** im Bereich der höchsten Erstreckung ein umfassbarer Griffbereich (18) ausgebildet ist.

7. Küchenmaschine nach einem oder mehreren der vorhergehenden Ansprüche, **dadurch gekennzeichnet, dass** die freikragende Länge (e) der Stangenteile (17) bezogen auf eine Mittelachse (y) 20% bis 50% der größten Tiefe (t) der Küchenmaschine (1) entspricht.

8. Küchenmaschine nach einem oder mehreren der vorhergehenden Ansprüche, **dadurch gekennzeichnet, dass** über die gesamte freikragende Länge (e) der Stangenteile (17) bezogen auf eine Seitenansicht die Mittelachsen (y) der Stangenteile (17) einen spitzen Winkel (β) zur Vorderseite (5) einschließen.

## Claims

1. A food processor (1) having a lower standing surface (2), a rear side (6) and a front side (5), wherein the front side (5), starting from the highest location of the food processor (1) assigned to the rear side (6), is formed obliquely in relation to a vertical and a holder (7) for a cooking vessel (8) is formed in the front side (5), wherein, furthermore, freely projecting rod parts (17) are formed in an upper region of the food processor (1), wherein the front ends (20) of the rod parts (17) are arranged on the same horizontal plane (E') and are set back toward the rear side (6) of the food processor (1) with respect to a furthest-forward projecting extent, **characterized in that** the set-back amount (f) corresponds to 25 % to 50 % of the largest extent (t) of the food processor (1) as seen in the depthwise direction in the standing-surface region (2) of the food processor (1), wherein the amount (f), at the same time, corresponds to approximately half the horizontal distance (d) between the longitudinal center axes (y) of the rod parts (17), wherein, furthermore, the contour of the front side (5) is always rounded in the region of the rod parts (17).

2. The food processor as claimed in claim 1 or in particular as claimed therein, **characterized in that** the food processor (1) has a control panel (13) on the front side (5), and **in that** the control panel (13) is formed in a manner running perpendicularly or is part of a continuous, obliquely running front side (5).

3. The food processor as claimed in one or more of the preceding claims, **characterized in that** the rear side (6), in relation to a side view, runs at an incline to the front side (5), enclosing an acute angle (α) to a vertical, wherein the edge termination of the front side (5) protrudes partially beyond the rear side (6) in a vertical projection.

4. The food processor as claimed in one or more of the preceding claims, **characterized in that** the greatest width (b) of the front side (5) is formed with a different width below the rod parts (17).

5. The food processor as claimed in one or more of the preceding claims, **characterized in that** the horizontal distance (d) between the rod parts (17), in relation to the center axes (y) thereof, corresponds to 40 % to 60 % of the greatest width (b) of the front side (5).

6. The food processor as claimed in one or more of the preceding claims, **characterized in that** a grip region (18), which can be grasped, is formed in the region of the highest extent.

7. The food processor as claimed in one or more of the preceding claims, **characterized in that** the freely projecting length (e) of the rod parts (17), in relation to a center axis (y), corresponds to 20 % to 50 % of the greatest depth (t) of the food processor (1).

8. The food processor as claimed in one or more of the preceding claims, **characterized in that** the center axes (y) of the rod parts (17) enclose an acute angle (β) to the front side (5) over the entire freely projecting length (e) of the rod parts (17), in relation to a side view.

## Revendications

1. Robot de cuisine (1) ayant une surface de support inférieure (2), un côté arrière (6) et un côté avant (5), dans lequel le côté avant (5) est incliné par rapport à une verticale à partir d'une partie la plus haute du robot de cuisine associée au côté arrière et une partie de réception (7) pour une cuve (8) est formée dans le côté avant (5), dans lequel des tiges (17) sont agencées librement en porte à faux dans une zone supérieure du robot de cuisine (1), dans lequel les extrémités avant (20) des tiges (17) sont agencées dans un même plan horizontal (E') et décalées vers le côté arrière (6) du robot de cuisine (1) par rapport à une extension faisant le plus loin saillie vers l'avant, **caractérisé en ce que** la distance de décalage en arrière (f) correspond à 25% à 50% de la dimension d'extension la plus grande (t) du robot de cuisine (1) suivant la profondeur dans la zone de la surface de support (2) du robot de cuisine (1), dans lequel la distance (f) correspond aussi approximativement à la moitié de l'espacement mutuel horizontal (d) des axes centraux longitudinaux (y) des tiges (17) et qu'en outre le contour du côté avant (5) s'étend de manière arrondie dans la zone des tiges (17).

2. Robot de cuisine selon la revendication 1, **caractérisé en ce que** le robot de cuisine (1) présente une zone de commande (13) sur le côté avant (5) et que la zone de commande (13) s'étend verticalement ou fait partie d'un côté avant (5) s'étendant d'un seul tenant de manière inclinée.

3. Robot de cuisine selon une ou plusieurs des revendications précédentes, **caractérisé en ce que**, suivant une vue de côté, le côté arrière (6) s'étend de manière inclinée vers le côté avant (5) suivant un angle aigu(α) par rapport à une verticale, dans lequel le bord terminal du côté avant (5) suivant une projection verticale fait saillie partiellement par rapport au côté arrière (6).

4. Robot de cuisine selon une ou plusieurs des revendications précédentes, **caractérisé en ce que** la largeur la plus grande (b) du côté avant (5) en cas de largeur variable est agencée sous les tiges (17).

5. Robot de cuisine selon une ou plusieurs des revendications précédentes, **caractérisé en ce que** l'espacement mutuel horizontal (d) des tiges (17) par rapport à leurs axes centraux (y) correspond à 40% à 60% de la largeur la plus grande (b) du côté avant (5).

6. Robot de cuisine selon une ou plusieurs des revendications précédentes, **caractérisé en ce qu'**une zone formant poignée de préhension est formée dans la zone d'extension la plus haute.

7. Robot de cuisine selon une ou plusieurs des revendications précédentes, **caractérisé en ce que** la longueur libre en porte-à-faux (e) des tiges (17) suivant un axe central (y) correspond à 20% à 50% de la profondeur la plus grande (t) du robot de cuisine (1).

8. Robot de cuisine selon une ou plusieurs des revendications précédentes, **caractérisé en ce que**, suivant une vue de côté, les axes centraux (y) des tiges (17) forment un angle aigu (B) par rapport au côté avant (5) sur toute la longueur libre en porte-à-faux (e) des tiges (17).
